# EUROPÄISCHE PATENTSCHRIFT

(11) **EP 1 129 923 B1**
(45) Veröffentlichungstag und Bekanntmachung des Hinweises auf die Patenterteilung: **20.10.2004**
(21) Anmeldenummer: 01101032.9
(22) Anmeldetag: 18.01.2001
(51) Int. Cl.: B62B 5/02

(54) **Transportvorrichtung**
Transport device
Dispositif de transport

(30) Priorität: 04.03.2000 DE 10010775
(43) Veröffentlichungstag der Anmeldung: 05.09.2001
(73) Patentinhaber: Alber Antriebstechnik GmbH, 72458 Albstadt (DE)
(72) Erfinder: Alber, Ulrich, 72459 Albstadt (DE)
(74) Vertreter: Möbus, Daniela, Dr.-Ing.

(56) Entgegenhaltungen:
- EP-A- 0 800 977
- DE-A- 3 713 564
- DE-A- 19 519 109
- DE-A- 19 745 153

## Beschreibung

Die Erfindung betrifft eine Transportvorrichtung mit Laufrädern und einer elektromotorisch angetriebenen Treppensteigvorrichtung mit Steigbeinen gemäß dem Oberbegriff des Anspruchs 1, wie sie auch von der DE 197 45 153 A1 gezeigt wird.

Transportvorrichtungen mit einer Treppensteigvorrichtung sind zwischenzeitlich in verschiedenen Varianten bekannt. So heschreibt die DE 37 13 564 C2 eine Transportvorrichtung, insbesondere für Rollstühle, die auf beiden Seitein ein Laufradpaar aufweist, dessen Laufräder um gesonderte, aber gemeinsam angetriebene, mit zueinander beabstandeten parallelen Wellen verschwenkbar sind, wobei die Wellen jeweils exzentrisch mit einer Nabenscheibe verbunden sind, an der ein Laufkranz des zugehörigen Laufrades konzentrisch und drehbar gelagert ist.

In der DE 197 45 153 A1 wird eine andere Transportvorrichtung mit an einem Gestell angeordneten Laufrädern und einer elektromotorisch angetriebenen Treppensteigvorrichtung beschrieben. Dabei treibt der Elektromotor erste Exzenterhebel an, an denen jeweils zweite Exzenterhebel drehbar gelagert sind, die mit ihren Enden an linear an der Transportvorrichtung geführten Trägern drehbar gelagert sind, wobei zwischen den ersten und zweiten Exzenterhebeln Zahnräder oder Ketten angeordnet sind. Diesen Transportvorrichtungen ist gemeinsam, dass sie eine relativ aufwendige Konstruktion unter Verwendung von Ketten und Zahnrädern erfordern. Außerdem benötigen sie einen relativ großen Elektromotor für die Treppensteigvorrichtung.

Die Erfindung hat die Aufgabe, eine Transportvorrichtung mit einer konstruktiv einfachen und leichten Treppensteigvorrichtung zu schaffen.

Die Erfindung löst die gestellte Aufgabe mittels einer Transportvorrichtung gemäß Anspruch 1. Da die als Kurbelwelle ausgebildete Antriebswelle sowohl das Steigbein als auch das Laufrad auf und ab bewegt, kann zukünftig eine aufwendige Leistungsübertragung mittels Ketten und Zahnrädern entfallen. Somit lässt sich die Treppensteigvorrichtung preiswerter herstellen und ist auch störungsunanfälliger. Ein weiterer Vorteil gegenüber der Transportvorrichtung der DE 37 13 564 C2 ist, dass das Steigbein mit kleinerem Abstand vor der nächsten Stufe die Last übernimmt. Dadurch verkürzt sich die horizontale Strecke zwischen dem Aufstützpunkt des Steigbeins und des auf der nächsten Stufe aufsetzenden Rades. Die Belastungsveränderung an den Handgriffen wird dadurch wesentlich reduziert.

Die Kurbeln zum Auf- und Abbewegen der Laufräder mit den Kurbeln zum Auf- und Abbewegen der Steigbeine können vorzugsweise einen Winkel von ca. 180° einschließen. Wenn sowohl die Laufrad- als auch die Steigbeinkurbeln gleich lang sind, ist das erforderliche Drehmoment und die Motorleistung minimal. Im Vergleich zur Transportvorrichtung aus der DE 197 45 153 A1 ist das erforderliche Drehmoment und die Motorleistung dann nur noch halb so groß. Folglich können das Getriebe und der Akku entsprechend kleiner dimensioniert werden, wodurch sich das Gewicht der gesamten Transportvorrichtung reduziert. Außerdem ergibt sich bei einem Akku geringerer Leistung auch ein kürzerer Ladezyklus.

Zur Führung der Steigbeine an der Vorrichtung können diese vorteilhafterweise entlang von Führungsschienen auf- und abbewegbar sein. Um die Reibung zwischen den Steigbeinen und den Führungsschienen zu reduzieren, können die Steigbeine vorteilhafterweise mittels Führungsrollen entlang der Führungsschienen geführt sein.

Alternativ zu einer Führung an einer Schiene können die Steigbeine beispielsweise auch mittels einer am Gestell gelagerten Führungskurbel bei der Auf- und Abbewegung geführt sein. Diese nicht auf der Kurbelwelle angeordnete Führungskurbel dreht sich parallel zu den Steigbeinkurbeln.

Die Führungskurbeln und die Kurbeln zum Auf- und Abbewegen der Steigbeine können durch eine Kette oder ein Transmissionsband miteinander verbunden sein. Dadurch wird verhindert, dass die Führungskurbeln und die Steigbeinkurbeln in eine instabile Lage geraten, wenn die Führungskurbeln und die Steigbeinkurbeln in einer Linie ausgerichtet sind.

Nachfolgend wird ein Ausführungsbeispiel anhand der beiliegenden Zeichnung näher erläutert.

Im Einzelnen zeigen:
- Fig. 1: eine Seitenansicht auf eine Transportvorrichtung mit einer Treppensteigvorrichtung;
- Fig. 2: eine Seitenansicht auf eine zweite Ausführungsform einer Transportvorrichtung mit einer Treppensteigvorrichtung;
- Fig. 3: eine Ansicht von hinten auf die Transportvorrichtung aus Fig. 1;
- Fig. 4 - Fig. 11: Seitenansichten der Transportvorrichtung aus Fig. 1 in verschiedenen Positionen beim Ersteigen einer Treppenstufe.

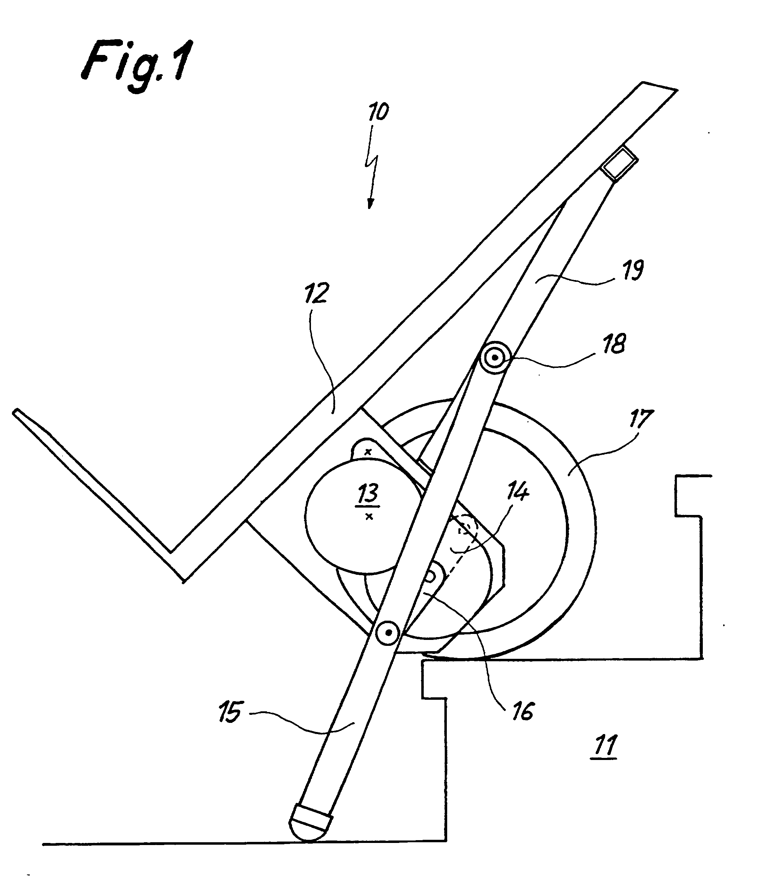

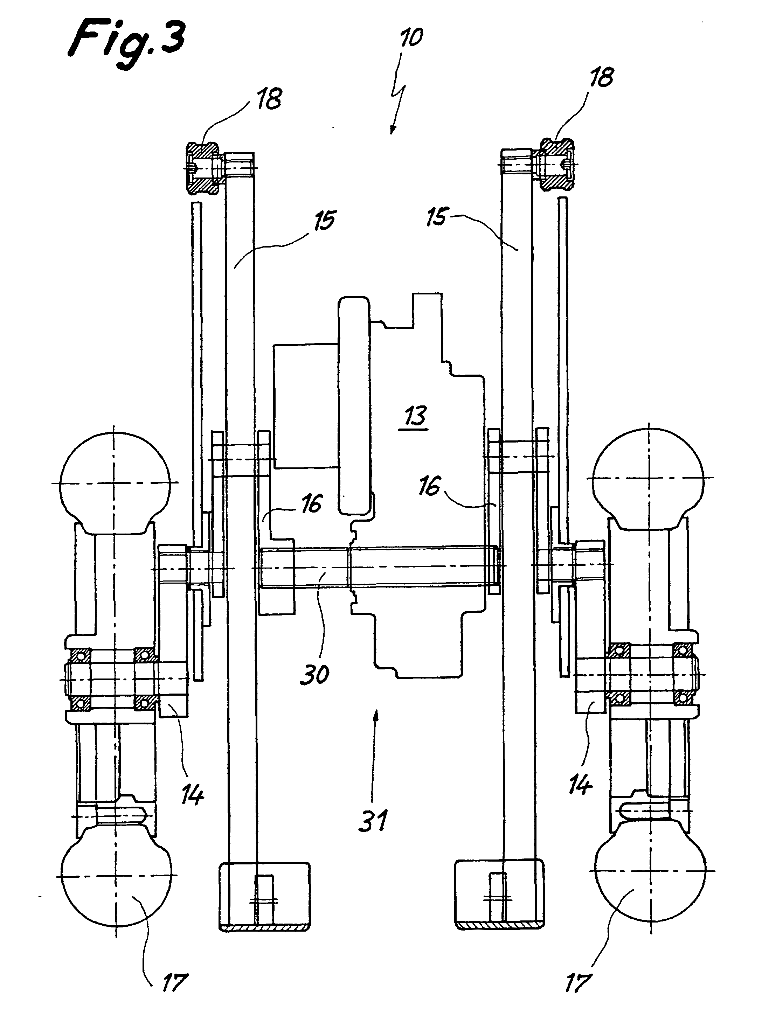

Fig. 1 zeigt eine Transportvorrichtung 10 mit einer Treppensteigvorrichtung 31 (Fig. 3) beim Ersteigen einer Treppenstufe 11. Die Transportvorrichtung 10 weist ein Gestell 12 zur Aufnahme einer hier nicht näher dargestellten Last auf. Ferner weist sie zwei Laufräder 17 und zwei Steigbeine 15 auf, von denen in der Seitenansicht jeweils nur eines dargestellt ist. Mittels eines Elektromotors 13 und einem Getriebe wird das Laufrad 17 über eine Kurbel 14 und das Steigbein 15 über eine Kurbel 16 auf- und abbewegt. Das Steigbein 15 weist an seinem oberen Ende eine Führungsrolle 18 auf, die in einer Führungsschiene 19 geführt wird.

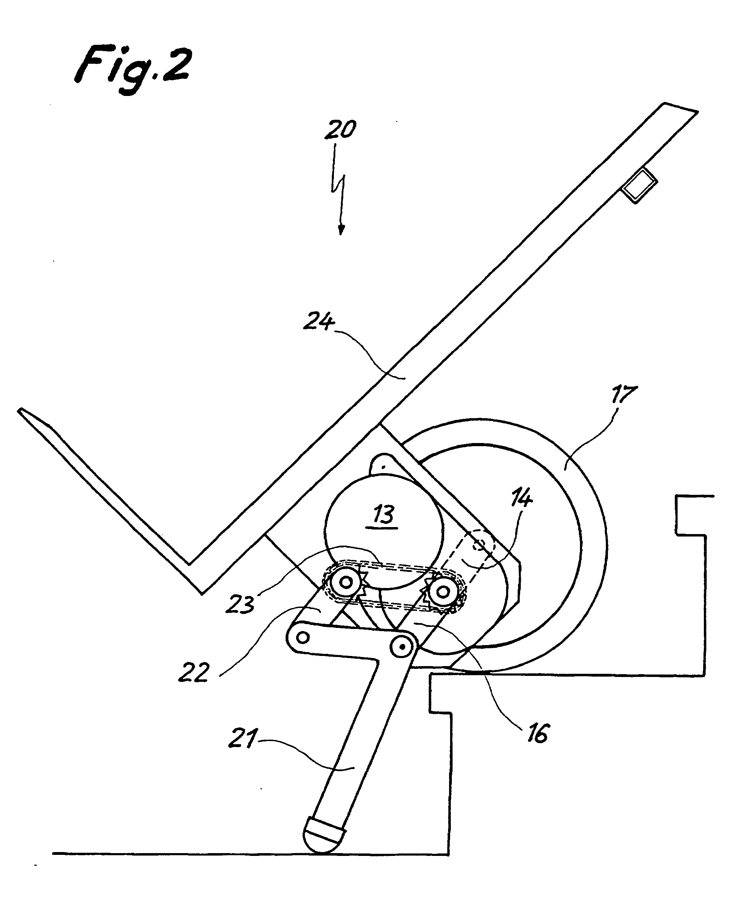

Fig. 2 zeigt eine alternative Ausgestaltung einer Transportvorrichtung 20, die sich von der Transportvorrichtung 10 aus Fig. 1 durch die Führung der Steigbeine 21 unterscheidet. Der Motor 13 bewegt über die Kurbel 14 das Laufrad 17 und über die Kurbel 16 das Steigbein 21 auf und ab. Parallel zur Steigbeinkurbel 16 dreht sich eine Führungskurbel 22, die am Steigbein 21 und am Gestell 24 der Vorrichtung 20 drehbar gelagert ist und die das Steigbein 21 immer in annähernd vertikaler Position hält. Die Steigbeinkurbel 16 und die Führungskurbel 22 sind über eine Kette 23 miteinander gekoppelt. Durch diese Koppelung wird verhindert, dass die Kurbeln 16 und 22 in dem Punkt, in dem die Kurbeln 16 und 22 auf einer Linie liegen, verharren können.

Fig. 3 zeigt in der Rückansicht die Treppensteigvorrichtung 31 der Transportvorrichtung 10 aus Fig. 1 in der Rückansicht. Die Treppensteigvorrichtung 31 weist den Motor 13 auf, in dem auch ein Getriebe integriert ist und der eine als Kurbelwelle ausgebildete Welle 30 antreibt. Die Kurbelwelle 30 ist symmetrisch zur zentralen Längsachse der Vorrichtung 10 ausgebildet und weist Kurbeln 14 zum Auf- und Abbewegen der Laufräder 17 und Kurbeln 16 zum Auf- und Abbewegen der Steigbeine 15 auf. Die Kurbeln 14 und 16 sind um 180° versetzt zueinander an der Welle 30 angeordnet. Die Steigbeine 15 sind in ihrem oberen Bereich mittels Führungsrollen 18 in hier nicht näher dargestellten Führungsschienen 19 (Fig. 1) geführt.

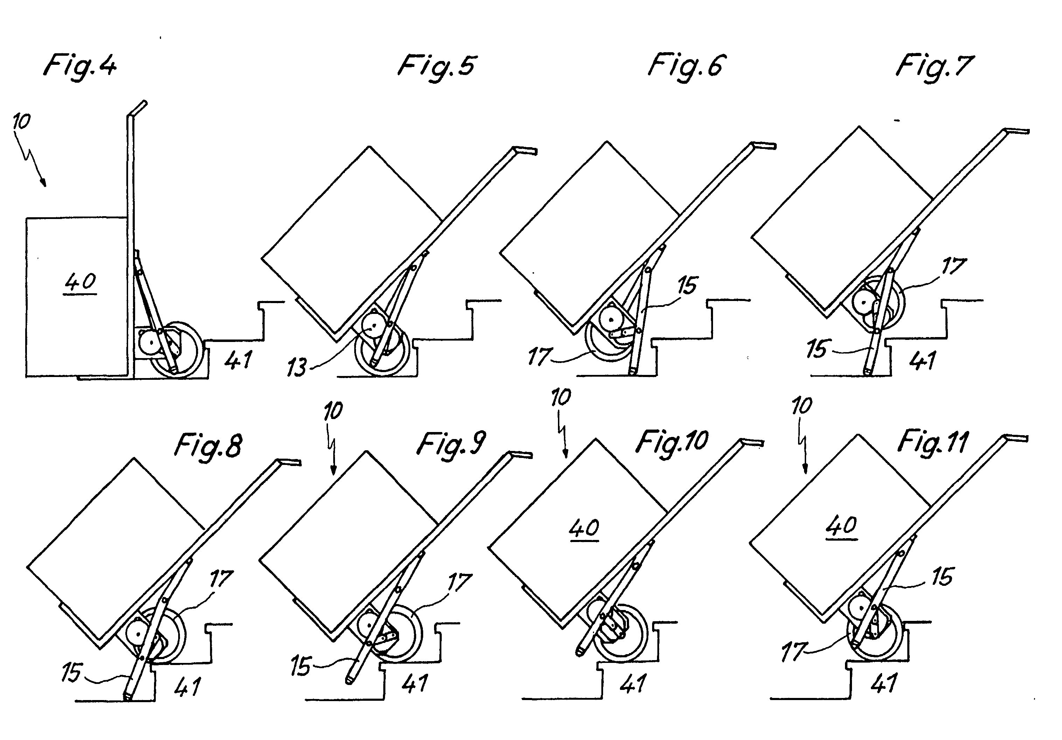

Die Funktionsweise der Transportvorrichtung 10 ist in den Fig. 4 bis 11 dargestellt. Fig. 4 zeigt die Transportvorrichtung 10 mit einer Last 40 im abgestellten Zustand. Das Laufrad 17 befindet sich unmittelbar vor der Kante einer Treppenstufe 41. Gemäß Fig. 5 wird anschließend die Transportvorrichtung 10 geneigt und der Motor 13 eingeschaltet. Dadurch wird die Kurbelwelle 30 in Drehung versetzt. Hierdurch ergibt sich die in Fig. 6 dargestellte Situation, wodurch das Steigbein 15 abwärts bewegt und die Transportvorrichtung 10 angehoben wird. Gleichzeitig zur Abwärtsbewegung des Steigbeins 15 wird das Laufrad 17 aufwärts bewegt. In Fig. 7 hat nun das Steigbein 15 seinen tiefsten Punkt und das Laufrad 17 seinen höchsten Punkt erreicht. Somit befindet sich der niedrigste Punkt des Laufrades 17 über der oberen Kante der nächsten zu ersteigenden Stufe der Treppe 41. In der Position nach Fig. 8 hat sich das Laufrad 17 wieder etwas abwärts und das Steigbein 15 etwas aufwärts bewegt, wodurch das Laufrad 17 auf der Stufe der Treppe 41 aufsetzt, wobei das Steigbein 15 noch auf der vorherigen Treppenstufe aufsteht. Fig. 9 bis 11 zeigen, wie das Steigbein 15 aufgrund der weiteren Drehung des Motors 13 und der Kurbelwelle 30 weiter aufwärts bewegt wird und sich das Laufrad 17 weiter abwärts bewegt. Dadurch wird die Transportvorrichtung 10 allmählich auf der neu erstiegenen Stufe der Treppe 41 angehoben. Das Steigbein 15 wird eingezogen. Fig. 11 zeigt das Steigbein 15 an seinem oberen und das Laufrad 17 an seinem unteren Scheitelpunkt. Somit haben die Transportvorrichtung 10 und die Last 40 ihren höchsten Punkt auf der neu erstiegenen Stufe der Treppe 41 erreicht. Beim Ersteigen der nächsten Stufen wiederholt sich der in den Fig. 5 bis 11 dargestellte Zyklus. Wenn die Transportvorrichtung 10 treppabwärts bewegt werden soll, so wird die Drehrichtung des Motors umgeschaltet und die Bewegungsfolge der Fig. 5 bis 11 in umgekehrter Reihenfolge durchgeführt.

Falls gewünscht, kann die Vorrichtung 10 auch mit einer Bremse für die Laufräder 17 versehen werden.

## Patentansprüche

1. Transportvorrichtung (10) mit Laufrädern (17) und einer elektromotorisch angetriebenen Treppensteigvorrichtung (31) mit Steigbeinen (15, 21), wobei der Elektromotor (13) eine als Kurbelwelle (30), die zur zentralen Längsachse der Vorrichtung (10) symmetrisch ist, ausgebildete Antriebswelle (30) antreibt, **dadurch gekennzeichnet, dass** an jeder Hälfte der Antriebswelle (30) an einer Kurbel (16) der Antriebswelle (30) ein Steigbein (15, 21) und an einer weiteren Kurbel (14) der Antriebswelle (30) ein Laufrad (17) drehbar gelagert sind.

2. Transportvorrichtung (10) nach Anspruch 1, **dadurch gekennzeichnet, dass** die Kurbeln (14) zum Auf- und Abbewegen der Laufräder (17) mit den Kurbeln (16) zum Auf- und Abbewegen der Steigbeine (15) einen Winkel von ca. 180° einschließen.

3. Transportvorrichtung (10) nach Anspruch 1 oder 2, **dadurch gekennzeichnet, dass** die Steigbeine (15) entlang einer Führungsschiene (19) auf- und abbewegbar sind.

4. Transportvorrichtung (10) nach Anspruch 3, **dadurch gekennzeichnet, dass** die Steigbeine (15) mittels Führungsrollen (18) entlang der Führungsschiene (19) geführt sind.

5. Transportvorrichtung (10) nach Anspruch 1 oder 2, **dadurch gekennzeichnet, dass** die Steigbeine (21) mittels einer an einem Gestell (24) gelagerten Führungskurbel (22) bei der Auf- und Abbewegung geführt sind.

6. Transportvorrichtung (10) nach Anspruch 5, **dadurch gekennzeichnet, dass** die Führungskurbeln (22) und die Kurbeln (16) zum Auf- und Abbewegen der Steigbeine (21) durch eine Kette (23) oder ein Transmissionsband miteinander verbunden sind.

## Claims

1. Transporting device (10) with wheels (17) and a step-climbing device (31) with climbing legs (15, 24), whereby the electromotor (13) drives a drive shaft in the form of a crankshaft (30) that is symmetrical in relation to the central, longitudinal axis of the device (10), **characterized in that**, on each half of the drive shaft (30), a climbing step (15, 24) is rotatably supported on one crank (16) and a wheel (17) is rotatably supported on a further crank (14).

2. Transporting device (10) in accordance with claim 1, **characterized in that** the cranks (14) for applying and removing the climbing legs (15) enclose an angle of approximately 180°.

3. Transporting device (10) in accordance with claims 1 or 2, **characterized in that** climbing legs (15) can be applied and removed along a guide rail (19).

4. Transporting device (10) in accordance with claim 3, **characterized in that** the climbing legs (15) are guided along the guide rail (19) by means of guide rollers (18).

5. Transporting device (10) in accordance with claims 1 or 2, **characterized in that** the climbing legs (21) are guided, by means of a guide crank (22) supported on a frame (24), when they are applied and removed.

6. Transporting device (10) in accordance with claim 5, **characterized in that** the guide crank (22) and the crank (16) for applying and removing the climbing legs (21) are connected to each other by means of a chain or a transmission belt.

## Revendications

1. Dispositif de transport (10) comportant des roues de roulement (17) et un dispositif de montée d'escalier (31) entraîné au moyen d'un moteur électrique avec des jambes de montée (15, 21), dans lequel le moteur électrique (13) entraîne un arbre d'entraînement (30) réalisé comme arbre de manivelle (30) qui est symétrique par rapport à l'axe longitudinal central du dispositif (10), **caractérisé en ce que** sur chaque moitié de l'arbre d'entraînement (30) sont montées à rotation une jambe de montée (15, 21) sur une manivelle (16) de l'arbre d'entraînement (30), et une roue de roulement (17) sur une autre manivelle (14) de l'arbre d'entraînement (30).

2. Dispositif de transport (10) selon la revendication 1, **caractérisé en ce que** les manivelles (14) pour la montée et la descente des roues de roulement (17) forment avec les manivelles (16) un angle d'environ 180° pour la montée et la descente des jambes de montée (15).

3. Dispositif de transport (10) selon la revendication 1 ou 2, **caractérisé en ce que** les jambes de montée (15) peuvent monter et descendre le long d'un rail de guidage (19).

4. Dispositif de transport (10) selon la revendication 3, **caractérisé en ce que** les jambes de montée (15) sont guidées au moyen de galets de guidage (18) le long du rail de guidage (19).

5. Dispositif de transport (10) selon la revendication 1 ou 2, **caractérisé en ce que** les jambes de montée (21) sont guidées lors du déplacement de montée et de descente au moyen d'une manivelle de guidage (22) montée sur un cadre (24).

6. Dispositif de transport (10) selon la revendication 5, **caractérisé en ce que** les manivelles de guidage (22) et les manivelles (16) pour la montée et la descente des jambes de montée (21) sont reliées entre elles par une chaîne (23) ou une courroie de transmission.
